Europäisches Patentamt

European Patent Office

Office européen des brevets

(19)

(11) **EP 0 783 127 B1**

(12) **FASCICULE DE BREVET EUROPEEN**

(45) Date de publication et mention
de la délivrance du brevet:
**12.12.2001 Bulletin 2001/50**

(51) Int Cl.[7]: **G02F 1/01**, G02F 1/313,
G02B 6/16

(21) Numéro de dépôt: **97460001.7**

(22) Date de dépôt: **03.01.1997**

(54) **Coupleur interférométrique Mach-Zehnder à fibre optique monomode**

Mach-Zehnder interferometricher Koppler mit optischer monomodiger Faser

Mach-Zehner interferometric coupler with single-mode optical fibre

(84) Etats contractants désignés:
**DE GB IT**

(30) Priorité: **08.01.1996 FR 9600284**

(43) Date de publication de la demande:
**09.07.1997 Bulletin 1997/28**

(73) Titulaire: **FRANCE TELECOM**
**75015 Paris (FR)**

(72) Inventeurs:
• **Dupont, Laurent**
**29280 Plouzane (FR)**
• **de Bougrenet de la Tocnaye, Jean-Louis**
**29217 Le Conquet (FR)**
• **Monerie, Michel**
**22300 Ploulec'h (FR)**

(74) Mandataire: **Maillet, Alain**
**SCP Le Guen & Maillet,**
**5, Place Newquay,**
**B.P. 70250**
**35802 Dinard Cedex (FR)**

(56) Documents cités:
**FR-A- 2 701 571**

• **OPTICS LETTERS, 15 MAY 1991, USA, vol. 16,
no. 10, ISSN 0146-9592, pages 770-772,
XP000202066 O'CALLAGHAN M J ET AL:
"Diffractive ferroelectric liquid-crystal shutters
for unpolarized light"**
• **PATENT ABSTRACTS OF JAPAN vol. 006, no.
092 (P-119), 29 Mai 1982 & JP 57 027234 A
(NIPPON TELEGR & TELEPH CORP), 13 Février
1982,**
• **OPTICS LETTERS, 15 AUG. 1994, USA, vol. 19,
no. 16, ISSN 0146-9592, pages 1204-1206,
XP000458334 FANG S P ET AL:
"High-performance single-mode fiber-optic
switch"**

**Description**

La présente invention concerne un coupleur interférométrique Mach-Zehnder comprenant un modulateur de phase à cristal liquide ferroélectrique insensible à la polarisation.

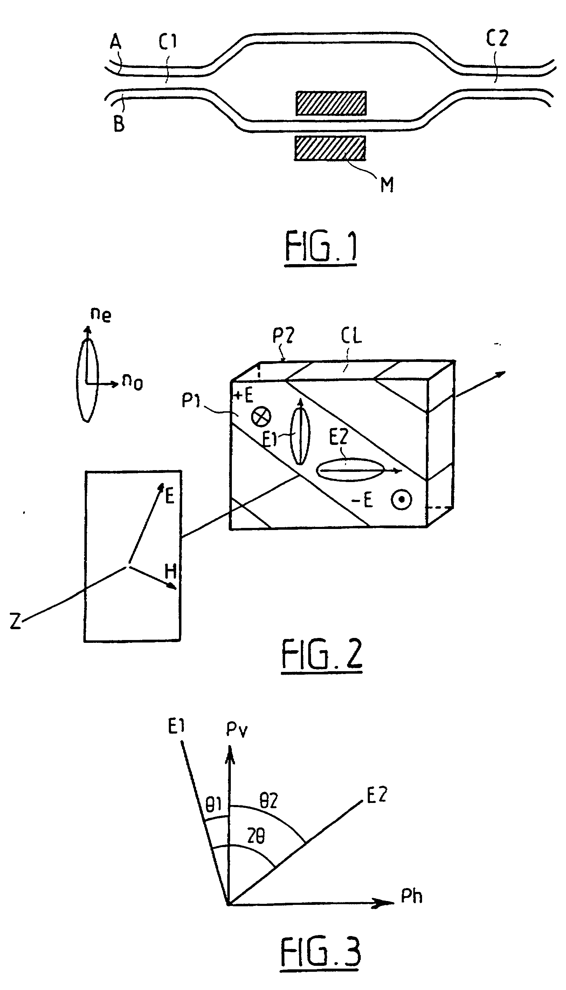

Un coupleur interférométrique Mach-Zehnder, comme le montre la Fig. 1 de la présente demande, est constitué de deux guides monomodes identiques A et B, et comprend deux coupleurs dont un premier coupleur C1, à gauche, de longueur $\Lambda/4$, où $\Lambda$ est la période de couplage, produit le transfert vers le guide B de la moitié de la puissance optique qui est entrée dans le guide A. Dans le guide B, à la sortie du coupleur C1, l'onde lumineuse est en avance de phase de $\pi/2$. A l'autre extrémité, le second coupleur C2 de longueur identique peut produire soit le transfert dans le guide B de la seconde moitié de la lumière si la phase y est, à l'entrée du coupleur C2, toujours en avance de $\pi/2$, soit le retour dans le guide A de la lumière du guide B si la phase y est en retard de $\pi/2$. Le fonctionnement du commutateur d'une voie vers l'autre est assuré par un modulateur de phase électro-optique M. A titre d'information, on pourra se reporter en ce qui concerne les coupleurs Mach-Zehnder à l'ouvrage technique "Les systèmes à fibres optiques" de P. Halley, publié par Eyrolles en 1985, page 143.

Dans l'ouvrage technique "Transmissions sur fibres optiques" de Y. Suematsu et al., publié par Masson en 1984, pages 110 et 111, il est également montré et décrit un commutateur optique comportant deux modulateurs de phase fonctionnant respectivement sur chaque branche d'un coupleur Mach-Zehnder.

Un premier objet de la présente invention consiste à prévoir, comme modulateur électro-optique dans un coupleur Mach-Zehnder, un modulateur électro-optique à cristal liquide ferroélectrique produisant une modulation de biréfringence par rotation de l'axe optique et permettant une modulation de phase qui est adaptée au fonctionnement d'un coupleur Mach-Zehnder.

A titre d'information, le principe et l'obtention d'une modulation d'indice, ou de phase binaire ou analogique dans un cristal liquide ferroélectrique ont été décrits dans l'article technique "Programmable binary phase-only optical device based on ferroelectric liquid crystal SLM" par S.E. Broomfield et al., paru dans la revue anglaise Electronics Letters du 2 janvier 1992, vol. 28, pp. 26-28, et dans l'article technique "High speed analog refractive index modulator that uses a chiral smectic liquid crystal" par A. Sneh et al., paru dans la revue américaine Optics Letters du 15 février 1994, vol. 19, n° 4, pp. 305-307. Par rapport aux autres modulateurs électro-optiques, les modulateurs à cristaux liquides sont des solutions intéressantes du fait de l'obtention d'effets électro-optiques importants sous faible champ électrique et pour un faible coût. Avec les cristaux liquides smectiques, on peut atteindre des temps de commutation pratiques de quelques dizaines de microsecondes.

Parmi les cristaux liquides smectiques qui permettent une modulation de phase binaire parfaitement bien contrôlée, les smectiques C* sont les mieux adaptés à l'application envisagée suivant l'invention pour permettre une modulation $(0,\pi)$. Une deuxième qualité concerne l'insensibilité à la polarisation. Plus précisément, le modulateur électro-optique doit être insensible, à la fois, à l'état et à l'orientation de la polarisation, dans la mesure où il n'est pas possible de contrôler l'état de la polarisation d'entrée du coupleur Mach-Zehnder ou au moins son orientation.

A titre d'information, différentes solutions ont déjà été décrites et proposées pour surmonter cet inconvénient; on pourra consulter à ce sujet, par exemple, le document WO-A-94 25893 et l'article technique "Polarisation insensitive operation of ferroelectric liquid crystal devices" par S.T. Warr et al., paru dans la revue anglaise Electronics Letters du 6 mars 1995, vol. 31, n° 9, pp. 714-716.

Par ailleurs, on a montré notamment dans l'article intitulé "Diffractive Ferroelectric liquid crystal shutters for unpolarized light" de M.J. O'Callaghan et al publié dans Optic Letters, Vol. 16 (1991), pages 770-772, l'intérêt de l'utilisation d'un cristal liquide à large angle de tilt $\theta$, proche de 45°, et fonctionnant en lame demi-onde pour réaliser des déphaseurs binaires, avec un minimum de pertes et insensibles à la polarisation.

Ce type de composant paraît extrêmement bien adapté pour réaliser un modulateur de phase électro-optique qui peut être utilisé dans un coupleur directionnel Mach-Zehnder.

Suivant l'invention, il est proposé d'utiliser dans un modulateur de phase électro-optique, comme cristal liquide, une cellule SSFLC - surface stabilized ferroelectric liquid crystal - dont la particularité est de disposer d'un large angle de tilt $\theta$ qui soit le plus proche possible de 45°.

A la Fig. 2 qui montre schématiquement le principe connu de fonctionnement d'une cellule classique SSFLC, la cellule CL a ses couches perpendiculaires aux parois P1 et P2, constituées par les deux grandes surfaces rectangulaires. L'épaisseur de la cellule CL est la distance entre les deux parois P1 et P2, et est choisie égale à $\lambda/2$, c'est-à-dire qu'il s'agit d'une cellule demi-onde. La cellule CL et les parois transparentes P1 et P2 sont supposées transmettre un faisceau lumineux Z dont le plan d'onde incidente est symboliquement représenté devant la cellule CL par ses vecteurs champs électromagnétiques E et H. Les parois transparentes P1 et P2 sont conductrices de l'électricité et peuvent être soumises à une différence de potentiel électrique +E, indiquée par l'empenne d'une flèche, ou -E, indiquée par la pointe d'une flèche.

Avec une cellule CL dont l'angle de tilt e est voisin de 45°, pour une différence de potentiel +E, qui correspond à l'état E1 représentant schématiquement l'orientation des molécules et pour une différence de potentiel -E, qui correspond à l'état E2 représentant schématiquement l'orientation commutée des molécules, on observe qu'entre l'état E1 et l'état E2, l'orientation des molécules a tourné de π/2. A droite de la Fig. 2, on a représenté l'état E1 symboliquement par une ellipse dont le grand axe porte le vecteur $n_e$ (indice extraordinaire) et le petit axe le vecteur $n_o$ (indice ordinaire).

A titre d'exemple, étant donné que Δn = 0,12 pour λ= 546 nm et Δn = 0,1 pour λ = 1550 nm, on est conduit à une épaisseur de cellule de l'ordre de 7 μm pour réaliser une lame demi-onde. Le temps de réponse est de 126 μs pour une tension de 10 V/μm à une température de 25° C et la polarisation spontanée de 72 nC/cm². A noter que pour une tension de 20 V/μm, le temps de réponse serait de 60 μs.

Sur le schéma de principe de la Fig. 2, il apparaît que l'axe optique du cristal liquide tourne de 90° si θ est égal à 45°, par changement du signe du champ électrique appliqué E. Quand l'épaisseur du cristal liquide est celle d'une lame demi-onde, on obtient une variation de phase égale à π entre les deux axes propres, ceci quel que soit l'état de polarisation.

En effet, dans un premier temps, considérons le cas d'une polarisation rectiligne d'orientation quelconque. Le passage au cas d'une polarisation elliptique quelconque ne change rien au principe de la modulation de phase dans le cas d'une polarisation rectiligne lorsque le déphasage anisotrope φ est égal à π et θ à 45°.

Considérons, à la Fig. 3 qui représente le diagramme d'orientation des axes neutres d'une cellule SSFLC utilisée dans les exemples de réalisation de l'invention, le cas d'une polarisation rectiligne incidente $P_i$, orientée suivant $P_v$. Dans le repère des polarisations rectilignes horizontale $P_h$ et verticale $P_v$, la matrice de Jones d'une cellule à cristal liquide SSFLC est dans le cas général:

$$J_{\theta,\phi} = \begin{pmatrix} \cos^2 s\theta \ \exp\left(-i\frac{\phi}{2}\right) + \sin^2 s\theta \ \exp\left(+i\frac{\phi}{2}\right) & -i \sin 2s\theta \sin\frac{\phi}{2} \\ -i \sin 2s\theta \sin\frac{\phi}{2} & \cos^2 s\theta \ \exp\left(+i\frac{\phi}{2}\right) + \sin^2 s\theta \ \exp\left(-i\frac{\phi}{2}\right) \end{pmatrix}$$

où θ est l'angle de tilt, s dépend de la position des axes neutres par rapport à la polarisation verticale $P_v$ et $\phi = 2\pi e/\lambda$ $(n_e - n_o)$ est le déphasage anisotrope. Le déphasage constant φ is = $\pi e/\lambda(n_e + n_o)$ a été ignoré.

Dans le cas où φ = π et si la polarisation d'entrée $P_i$ est verticale, la polarisation de sortie $P_s$ est:

$$P_s = -i(\cos 2s\theta \ P_v + \sin 2s\theta \ P_h)$$

Si l'on choisit θ = 45°, on obtient, dans le cas où s = 2 ∝ correspondant à l'état E1 du cristal liquide:

$$P_S{}^1 = -i \ (\cos 4 \propto \theta \ P_V + \sin 4 \propto \theta \ P_h)$$

et dans le cas où s = 2(∝- 1) correspondant au deuxième état adressé E2 du cristal liquide:

$$P_S{}^2 = +i \ (\cos 4 \propto \theta P_v + \sin 4 \propto \theta \ P_h)$$

Les relations ci-dessus démontrent l'obtention de deux états de polarisation identiques en sortie, mais déphasés entre eux de π.

De telles conditions sont remplies, par exemple, en utilisant pour les cellules SSFLC, le matériau CS-2005 de Chisso et en ajustant l'épaisseur de la cellule pour obtenir une lame demi-onde à la longueur d'onde de fonctionnement du coupleur.

Selon l'invention, il est prévu un coupleur interférométrique Mach-Zehnder comprenant un modulateur de phase électro-optique placé sur le trajet d'au moins une fibre optique monomode, le modulateur étant formé par une cellule de cristal liquide smectique chiral ferroélectrique C* traversée par un signal lumineux transmis par ladite fibre, la cellule étant pourvue de parois transparentes et d'électrodes de commande transparentes, dans lequel le cristal liquide, utilisé en lame demi-onde, étant du type SSFLC - surface stabilized ferroelectric liquid crystal - ayant un large angle de tilt e qui soit le plus proche possible de 45°, de manière à ce que ledit modulateur soit insensible à la polarisation.

Suivant une autre caractéristique, le modulateur placé sur le trajet de deux fibres parallèles, les deux fibres étant couplées en entrée et en sortie dudit modulateur par deux coupleurs à 3 dB, ledit modulateur étant adapté pour moduler le signal lumineux transmis par l'une quelconque des deux fibres.

Suivant une autre caractéristique, les deux fibres sont sectionnées de manière à avoir chacune deux extrémités de part et d'autre de ladite cellule, les parois de ladite cellule comportant un trou borgne en face de chaque extrémité qui est montée dans le trou borgne devant une électrode de commande.

Suivant une autre caractéristique, la fibre est une fibre multicoeurs à deux ou quatre coeurs qui forment deux paires de fibres individuelles.

Suivant une autre caractéristique, la fibre multicoeurs est sectionnée pour constituer deux fibres multicoeurs qui sont disposées de part et d'autre de ladite cellule de façon que leurs coeurs soient alignés, les parois de ladite cellule comportant un trou borgne en face de l'extrémité de chaque fibre multicoeurs qui est montée dans le trou borgne devant une pluralité d'électrodes de commande.

Suivant une autre caractéristique, la fibre multicoeurs est une fibre à quatre coeurs qui est sectionnée devant la cellule dont la paroi amont comporte un trou borgne en face de l'extrémité de la fibre multicoeurs et, sur la paroi aval de la cellule, est disposé une couche guidante qui transmet respectivement les signaux optiques issus de deux des quatre coeurs et modulés au passage à travers la cellule pour les renvoyer inaltérés à travers la cellule vers les deux autres des quatre coeurs de la fibre multicoeurs.

Suivant une autre caractéristique, la fibre multicoeurs est une fibre à quatre coeurs qui est sectionnée un peu avant la cellule dont la paroi amont comporte en face de chaque coeur une micro-optique de collimation et dont la paroi aval est adjacente à la grande face d'un prisme à réflexion totale, les signaux optiques issus de deux des quatre coeurs étant respectivement renvoyés vers les deux autre coeurs.

Les caractéristiques de la présente invention mentionnées ci-dessus, ainsi que d'autres, apparaîtront plus clairement à la lecture de la description suivante d'exemples de réalisation, ladite description étant faite en relation avec les dessins joints, parmi lesquels:

la Fig. 1 montre schématiquement la structure d'un coupleur directionnel Mach-Zehnder, telle qu'elle est connue dans la technique,
la Fig. 2 est une vue schématique illustrant le principe connu de fonctionnement d'une cellule de cristal liquide SSFLC,
la Fig. 3 est un diagramme vectoriel illustrant le comportement de la cellule à cristal liquide SSFLC de la Fig. 2, quand elle dispose d'un large angle de tilt, proche de 45°,
la Fig. 4 est une vue schématique, partiellement éclatée, d'un premier exemple de réalisation d'un modulateur de phase électro-optique d'un coupleur Mach-Zehnder suivant l'invention,
la Fig. 5 est une vue schématique en coupe longitudinale d'un second exemple de réalisation suivant l'invention,
la Fig. 6 est une vue en coupe transversale d'une fibre multicoeurs à quatre coeurs servant à illustrer l'exemple de réalisation de la Fig. 6,
la Fig. 7 est une vue schématique, en coupe longitudinale, d'une variante de l'exemple de réalisation de la Fig. 5,
la Fig. 8 est une vue schématique en coupe longitudinale d'un troisième exemple de réalisation suivant l'invention, fonctionnant en réflexion, et
la Fig. 9 est une variante du dispositif de la Fig. 8.

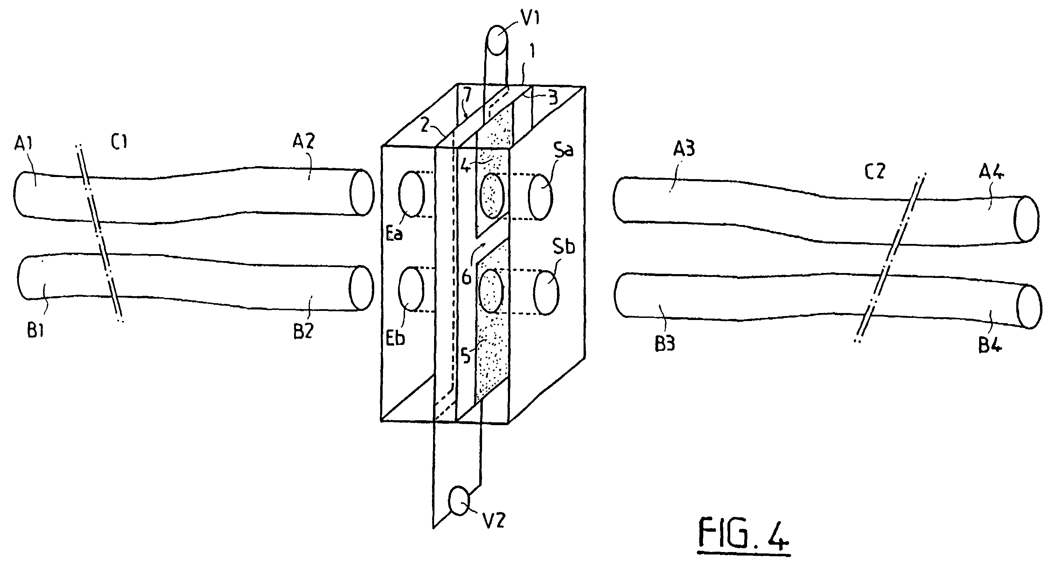

A la Fig. 4, on a montré schématiquement un coupleur Mach-Zehnder comprenant deux fibres optiques A1 et B1 entrant dans un premier coupleur C1, classique à 3 dB, d'où sortent deux fibres ou guides optiques A2 et B2 qui sont couplées aux entrées Ea et Eb d'une cellule de cristal liquide SSFLC 1. Aux sorties Sa et Sb de la cellule 1, sont couplées deux fibres ou guides optiques A3 et B3 qui entrent dans un second coupleur C2, classique à 3 dB, d'où sortent deux fibres optiques A4 et B4.

La cellule 1 est limitée par des parois latérales parallèles 2 et 3 qui sont orientées perpendiculairement aux axes optiques des guides A2 et B2 et qui définissent l'épaisseur de cellule qui est choisie égale à une demi-onde, c'est-à-dire la moitié de la longueur d'onde de fonctionnement. Suivant les directions longitudinales, la cellule 1 est délimitée par des moyens classiques connus. Le matériau des parois 2 et 3 est du verre transparent isotrope classique.

En face des guides A2 et B2 et en face des guides A3 et A4, des trous borgnes Ea, Eb, Sa et Sb sont respectivement forés de l'extérieur dans les parois transparentes 2 et 3, de manière à constituer les entrées Ea et Eb et les sorties Sa et Sb. Ces trous borgnes permettent de mettre les extrémités des deux fibres le plus près possible du cristal liquide et de minimiser ainsi les pertes de couplage entre les fibres ou les guides et la cellule 1.

La face interne de la paroi 2 est partiellement revêtue, du côté des trous sa et Sb, de deux électrodes 4 et 5 en forme de plaques conductrices verticales qui sont assez minces pour être transparentes à la lumière sortant de la cellule 1. L'utilisation et la fabrication de telles couches conductrices minces est classique dans la technique. Les électrodes 4 et 5 laissent entre elles un intervalle isolant horizontal 6.

La face interne de la paroi 1 est partiellement revêtue d'une plaque mince conductrice verticale 7 sur toute sa hauteur.

Les électrodes 4 et 5 sont respectivement électriquement reliées aux premières bornes de deux sources de potentiel V1 et V2 tandis que l'électrode 7 est reliée aux secondes bornes des sources V1 et V2, l'électrode 7 jouant le rôle d'une contre-électrode commune par rapport aux électrodes 4 et 5 qui sont commandées sélectivement.

Les électrodes 4, 5 et 7 sont transparentes, l'électrode 4 recouvrant la zone du fond du trou borgne Sa et la zone environnante, l'électrode 5 recouvrant la zone du fond du trou borgne Sb et la zone environnante, et l'électrode 7 recouvrant à la fois les zones des fonds du trou borgne Ea et du trou borgne Eb ainsi que leurs zones environnantes. L'intervalle 6 entre les électrodes 4 et 5 est orienté normalement aux guides optiques A3 et B3 et sert à isoler électriquement les électrodes 4 et 5, et à séparer physiquement leurs zones d'influence dans le cristal liquide de la cellule 1.

Il est à noter que, par rapport au coupleur M de la Fig. 1, l'exemple de réalisation de la Fig. 4 comporte deux modulateurs de phase électro-optiques au lieu d'un modulateur M. La configuration de la Fig. 4 équilibre naturellement les déphasages des deux voies de transmission par guides optiques A2-A3 et B2-B3, ce qui a pour effet de créer une structure d'interféromètre et de rendre le dispositif complètement insensible à la polarisation. Chacune des voies peut être commandée séparément du fait de la séparation des électrodes 4 et 5 par rapport à leur contre-électrode commune 7.

De plus, le dispositif peut être très compact et aucune inhomogénéité n'est à craindre du point de vue cristal liquide dans la mesure où les deux voies utilisent la même cellule.

Le fonctionnement du coupleur interférométrique Mach-Zehnder de la Fig. 4 est le suivant: à la sortie du coupleur C1, dans la fibre B2, l'onde lumineuse est en avance de phase de $\pi/2$. Si on applique les sources de potentiel V1 et V2, dans le guide B3; l'onde lumineuse sera en avance de phase de $\pi/2$ et, à la sortie du coupleur C2, la fibre B4 transmettra toute l'onde lumineuse; si on applique les sources de potentiel V1 et -V2, dans le guide A3, l'onde lumineuse sera en retard de phase de $\pi/2$ et, à la sortie du coupleur C2, la fibre A4 transmettra toute l'onde lumineuse.

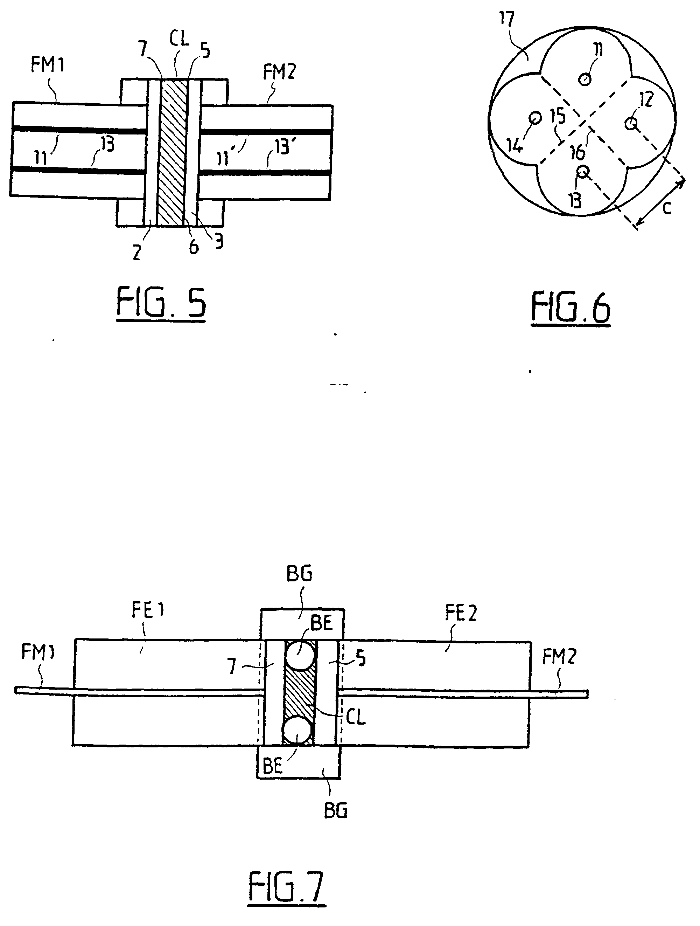

La Fig. 5 représente schématiquement en coupe longitudinale un deuxième exemple de réalisation.

Le fonctionnement du coupleur interféromètrique de la Fig. 4 suppose un équilibrage très strict des bras de l'interféromètre, c'est-à-dire un contrôle extrêmement précis de la longueur des fibres A2-A3 et B2-B3. La satisfaction d'une telle contrainte peut s'avérer difficile à concilier avec un impératif de mise en oeuvre à bas coût. Pour surmonter cette difficulté, on propose d'utiliser une fibre multicoeurs pour constituer les bras de l'interféromètre. En ce qui concerne les fibres muticoeurs, on pourra se reporter au contenu du document FR-A-2 701 571 (Demande de brevet français n° 93 01674 déposée le 15.02.93 et intulée "Guides optiques multicoeurs de grande précision et de petites dimensions et procédé de fabrication de ces guides").

Dans l'exemple de réalisation de la Fig. 5, on utilise une fibre multicoeurs comprenant quatre coeurs telle que celle décrite dans l'article technique "Ultra high density cables using a new concept of bunched single mode fibres: a key for the future FTTH networks" par G. Le Noane et al., IWCS, Atlanta, USA, novembre 1994.

La Fig. 6 montre une coupe transversale d'une telle fibre multicoeurs, qui correspond à la Fig 1 de l'article mentionné ci-dessus de G. Le Noane et al. La fibre comporte quatre coeurs 11, 12, 13 et 14 qui géométriquement sont placés aux sommets d'un carré dont la longueur du côté c, Fig. 6, est de 44,2 $\mu$m. Chaque coeur 11 à 14 est entouré d'un revêtement en verre dont la surface latérale comporte une partie d'arc circulaire d'environ 180° prolongé par les demi-plans d'un dièdre rectangulaire dont l'arête est commune aux quatre coeurs. A la Fig. 6, les projections des quatre dièdres sont représentées par des segments de droites 15 et 16 en traits tirets. Dans la pratique, chaque coeur et son revêtement sont fabriqués à partir d'une préforme élémentaire de forme géométrique adéquate; puis la surface de la préforme élémentaire est polie pour plus de précision; les quatre préformes élémentaires sont assemblées et fibrées comme l'indique la Fig. 6; et, enfin, les quatre fibres sont revêtues d'un revêtement 17, par exemple, de plastique de section circulaire de 125 $\mu$m de diamètre.

A la Fig. 5, on a représenté les coeurs 11 et 13 d'une fibre multicoeurs entrante FM1, et les coeurs correspondants 11' et 13' d'une fibre multicoeurs sortante FM2, analogues respectivement aux fibres entrantes A2 et B2, et aux fibres sortantes A3 et 83 de l'exemple de la Fig. 4. Comme à la Fig. 4, on retrouve, entre les fibres FM1 et FM2, la cellule de cristal liquide CL pourvue d'électrodes transparentes 5 à 7 et de deux parois transparentes 2 et 3. Celles-ci présentent des trous borgnes pour que les extrémités des coeurs entrants de la fibre FM1 et sortants de la fibre FM2 soient respectivement le plus près possible du cristal liquide. Le fonctionnement du dispositif est le même qu'à la Fig. 4 à ceci près que, dans les fibres multicoeurs FM1 et FM2, on n'utilise que deux coeurs sur les quatre disponibles, ou une fibre multicoeurs à deux coeurs.

L'avantage du dispositif de la Fig. 5 par rapport à celui de la Fig. 4 est, comme déjà mentionné, de garantir l'égalité des longueurs de bras 11 et 13 et celle des bras 11' et 13'. De plus, la fibre multicoeurs assure que les bras de l'interféromètre sont solidaires quelle que soit la température, ce qui permet d'assurer pratiquement l'insensibilité du dispositif aux variations de température. D'autre part, il est plus facile d'assurer l'alignement de fibres multicoeurs que celui de deux fibres indépendantes. L'emploi de connecteur standard est alors possible, ce qui réduit la complexité et, donc, le coût.

Dans l'exemple précédent, on n'a utilisé que deux coeurs 11 et 13 sur les quatre coeurs disponibles dans une fibre multicoeurs de la Fig. 6, mais on peut utiliser les deux autres coeurs 12 et 14 dans un second coupleur interféromètre suivant l'invention en n'utilisant qu'une seule cellule à cristal liquide à condition de prévoir deux électrodes supplémentaires analogues à 7 et 8, mais décalées de 90°. La mise en oeuvre technologique - polissage, dépôt d'ITO, de couches d'alignement, etc. - est identique à celle qui a déjà été mentionnée à la différence d'une simplification du point de vue de la mise en vis-à-vis des fibres et de leur alignement.

Il est évidemment possible d'utiliser la deuxième paire de coeurs indépendamment de la première, par exemple pour avoir deux interféromètres en parallèle. Les exemples ci-dessus correspondent à une configuration en transmission mais on peut concevoir une configuration en réflexion notamment en utilisant le principe d'une fibre multicoeurs à quatre coeurs. Dans le cas de l'utilisation d'une fibre multicoeurs, le dépôt de l'électrode transparente peut être effectué directement sur la section de la fibre multicoeurs.

On a montré, à la Fig. 7, une variante de l'exemple de réalisation de la cellule 1 de la Fig. 5 à laquelle sont associées la fibre multicoeurs d'entrée FM1 et la fibre multicoeurs de sortie FM2 qui sont respectivement logées dans des férules FE1 et FE2 qui, dans cette variante, jouent, entre autres, le rôle des parois transparentes 2 et 3 de la Fig. 5. Dans ce cas, les sections d'extrémité des fibres FM1 et FM2, au moins en ce qui concerne les coeurs utilisés, sont polies, puis revêtues par dépôt d'électrodes transparentes analogues aux électrodes 5 à 7, auxquelles sont superposées des fines plaquettes de polymères d'alignement. Ces électrodes transparentes obturent partiellement aussi les trous de logement des fibres FM1 et FM2 dans les férules FE1 et FE2, ce qui entraîne que ces trous de logement peuvent être considérés comme des trous borgnes comme dans l'exemple de la Fig. 5. Ensuite, les deux fibres FM1 et FM2 sont mises en vis-à-vis, l'opération pouvant être assurée en utilisant un référentiel constitué de deux surfaces perpendiculaires, - comme cela est décrit dans le document FR-A-2 701 571, page 13, lignes 8 à 19 - puis fixées par une bague de maintien BG. L'espacement de 7 micromètres entre les deux extrémités des fibres est assuré, pour obtenir une lame demi-onde par des billes d'espacement d'un diamètre de 7 micromètres. Enfin, le cristal liquide CL est introduit, pour occuper l'espace libre entre les extrémités, polies et revêtues d'électrodes, des fibres multicoeurs, par capillarité.

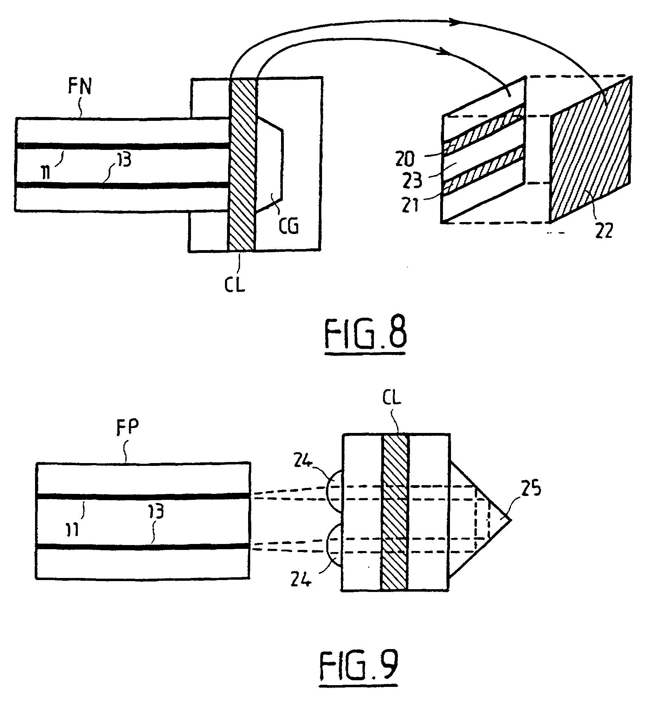

La Fig. 8 montre un exemple de réalisation de configuration en transmission mais avec repliement de la transmission lumineuse.

Comme dans l'exemple de réalisation de la Fig. 5, le dispositif comprend, à gauche de la cellule de cristal liquide CL en regardant le dessin, une fibre multicoeurs FN à quatre coeurs 11 à 14, comme à la Fig. 6, la cellule de cristal liquide CL et, à droite de celle-ci, une couche guidante CG. La couche guidante CG fonctionne en renvoyant le signal lumineux qui sort du coeur 11, à travers la cellule CL, à l'entrée du coeur 12 de la même fibre FN, et le signal lumineux qui sort du coeur 13, à travers la cellule CL, à l'entrée du coeur 14 de la fibre FN et permet de limiter la divergence du faisceau en sortie de fibre. Ceci suppose qu'au niveau des guides optiques dans la couche CG, il n'existe que des faibles interactions de manière à limiter la dispersion et, donc, les pertes d'injection dans la deuxième paire de coeurs.

Comme le montre schématiquement la Fig. 8, les électrodes associées à la cellule CL sont les électrodes horizontales 20 et 21, en face respectivement des régions des coeurs 11 et 13, et la contre-électrode 22, en face des régions des coeurs 11 à 14. Comme les électrodes 4 et 5, les électrodes 20 et 21 peuvent être reliées sélectivement aux premières bornes de sources de potentiel V1 ou V2, tandis que l'électrode 22 est reliée aux secondes bornes communes de ces sources. Entre les bandes transparentes parallèles formant les électrodes 20 et 21, est prévue une bande isolante 23.

Le fonctionnement de l'exemple de la Fig. 8 est pratiquement le même que celui de l'exemple de la Fig. 6, en tenant compte qu'en face des régions des coeurs 12 et 14, il n'existe pas - c'est la bande 23 - d'électrodes de commande sélective, c'est-à-dire que la cellule CL n'apporte pas de déphasage de phase. En conclusion, le trajet optique est replié par la couche guidante CG.

L'exemple de réalisation de la Fig. 8 apporte un gain évident en compacité par rapport aux autres exemples de réalisation. Cela suppose que l'information sortant d'une paire de coeurs soit ensuite réinjectée dans la deuxième paire de coeurs, tout en effectuant au passage la modulation de phase requise.

La Fig. 9 montre encore un exemple de réalisation de configuration avec repliement, mais dans lequel on utilise des micro-optiques de collimation de faisceau et un miroir qui assure le repliement.

Le dispositif comprend, à gauche du dessin, une fibre multicoeurs FP à quatre coeurs 11 à 14, comme à la Fig. 6, la fibre FP étant sectionnée transversalement devant une cellule CL qui est pourvue, en face respectivement de chaque coeur 11 à 14, d'un dispositif micro-optique de collimation 24. Derrière la cellule CL, c'est-à-dire à droite en regardant le dessin, est prévu un prisme à réflexion totale 25 qui sert de miroir pour réfléchir le signal lumineux provenant respectivement des coeurs 11 et 12 vers les coeurs 13 et 14 de la fibre FP.

Une contrainte particulière est ici le maintien de la polarisation relative entre les voies. On peut l'obtenir en utilisant des miroirs diélectriques sous la condition de Brewster ou bien d'un prisme à réflexion totale fonctionnant dans les mêmes conditions. Dans le cas d'une fibre multicoeurs, compte tenu des ordres de grandeur (focale et diamètre des microlentilles), afin de garantir un bon parallélisme du faisceau entre les deux microlentilles de collimation, le chemin optique entre les lentilles ne doit par excéder 1 mm.

Ce type de solution garantit un bon bilan de liaison mais requiert un positionnement de la fibre par rapport aux micro-optiques de collimation, c'est-à-dire un positionnement des quatre coeurs au foyer des quatre microlentilles

# EP 0 783 127 B1

24, ce qui impose l'existence d'un degré de tolérance sur la distance focale.

**Revendications**

**1.** Coupleur interférométrique Mach-Zehnder comprenant un modulateur de phase électro-optique placé sur le trajet d'au moins une fibre optique monomode, **caractérisé en ce que** ledit modulateur est formé par une cellule (CL) de cristal liquide smectique chiral ferroélectrique C* traversée par un signal lumineux transmis par ladite fibre, la cellule (CL) étant pourvue de parois transparentes et d'électrodes de commande transparentes (5 à 7), le cristal liquide (CL), utilisé en lame demi-onde, étant du type SSFLC - surface stabilized ferroelectric liquid crystal - ayant un large angle de tilt θ le plus proche possible de 45°, de manière à ce que ledit modulateur soit insensible à la polarisation.

**2.** Coupleur interférométrique Mach-Zehnder selon la revendication 1, **caractérisé en ce que** ledit modulateur est placé sur le trajet de deux fibres optiques (A2, A3; B2, B3) parallèles, les deux fibres étant couplées en entrée et en sortie dudit modulateur par deux coupleurs à 3 dB, ledit modulateur étant adapté pour moduler le signal lumineux transmis par l'une quelconque des deux fibres.

**3.** Coupleur interférométrique Mach-Zehnder selon la revendication 2, **caractérisé en ce que** les deux fibres (A2, A3; B2, B3) sont sectionnées de manière à avoir chacune deux extrémités de part et d'autre de ladite cellule, les parois (2, 3) de ladite cellule (CL) comportant un trou borgne (Ea, Eb, Sa, Sb) en face de chaque extrémité qui est montée dans le trou borgne devant une électrode de commande (5 à 7).

**4.** Coupleur interférométrique Mach-Zehnder selon la revendication 1, **caractérisé en ce que** la fibre est une fibre multicoeurs (FM1, FM2) à deux ou quatre coeurs qui forment deux paires de fibres individuelles.

**5.** Coupleur interférométrique Mach-Zehnder selon la revendication 4, **caractérisé en ce que** la fibre multicoeurs est sectionnée pour constituer deux fibres multicoeurs (FM1 et FM2) qui sont disposées de part et d'autre de ladite cellule (CL) de façon que leurs coeurs soient alignés, les parois (2, 3) de ladite cellule (CL) comportant un trou borgne en face de l'extrémité de chaque fibre multicoeurs qui est montée dans le trou borgne devant une pluralité d'électrodes commande.

**6.** Coupleur interférométrique Mach-Zehnder selon la revendication 4, **caractérisé en ce que** la fibre multicoeurs (FN) est une fibre à quatre coeurs qui est sectionnée devant la cellule (CL) dont la paroi amont comporte un trou borgne en face de l'extrémité de la fibre multicoeurs et, sur la paroi aval de la cellule, est disposé une couche guidante (CG) qui transmet respectivement les signaux optiques issus de deux des quatre coeurs et modulés au passage à travers la cellule pour les renvoyer inaltérés à travers la cellule (CL) vers les deux autres des quatre coeurs de la fibre multicoeurs (FN).

**7.** Coupleur interférométrique Mach-Zehnder selon la revendication 4, **caractérisé en ce que** la fibre multicoeurs (FP) est une fibre à quatre coeurs qui est sectionnée un peu avant la cellule (CL) dont la paroi amont comporte en face de chaque coeur une micro-optique de collimation (24) et dont la paroi aval est adjacente à la grande face d'un prisme à réflexion totale (25), les signaux optiques issus de deux des quatre coeurs étant respectivement renvoyés vers les deux autres coeurs.

**Claims**

**1.** Mach-Zehnder interferometric coupler comprising an electro-optical phase modulator placed on the path of at least one single-mode optical fibre, **characterised in that** said modulator is formed by a ferroelectric chiral smectic C* liquid crystal cell (CL) passed through by a luminous signal transmitted by said fibre, the cell (CL) being provided with transparent walls and transparent control electrodes (5 to 7), the liquid crystal (CL), used as a half-wave plate, being of the type SSFLC - surface stabilised ferroelectric liquid crystal - having a wide tilt angle θ as close as possible to 45°, so that said modulator is insensitive to polarisation.

**2.** Mach-Zehnder interferometric coupler according to claim 1, **characterised in that** said modulator is placed on the path of two parallel optical fibres (A2, A3; B2, B3), the two fibres being coupled on entering and leaving said modulator by means of two 3-dB couplers, said modulator being adapted to modulate the luminous signal transmitted by either of the two fibres.

**3.** Mach-Zehnder interferometric coupler according to claim 2, **characterised in that** the two fibres (A2, A3; B2, B3) are divided into sections so that each has two ends on either side of said cell, the walls (2, 3) of said cell (CL) including a blind hole (Ea, Eb, Sa, Sb) opposite each end which is mounted in the blind hole in front of a control electrode (5 to 7).

**4.** Mach-Zehnder interferometric coupler according to claim 1, **characterised in that** the fibre is a multicore fibre (FM1, FM2) with two or four cores which form two pairs of individual fibres.

**5.** Mach-Zehnder interferometric coupler according to claim 4, **characterised in that** the multicore fibre is divided into sections to constitute two multicore fibres (FM1 and FM2) which are disposed on each side of said cell (CL) so that their cores are aligned, the walls (2, 3) of said cell (CL) including a blind hole opposite the end of each multicore fibre which is mounted in the blind hole in front of a plurality of control electrodes.

**6.** Mach-Zehnder interferometric coupler according to claim 4, **characterised in that** the multicore fibre (FN) is a four-core fibre which is divided into sections in front of the cell (CL), the back wall of which includes a blind hole opposite the end of the multicore fibre, and on the front wall of the cell is disposed a guiding layer (CG) which transmits respectively the optical signals coming from two of the four cores and modulated in passing through the cell to send them back unaltered through the cell (CL) towards the two other multicore fibres (FN).

**7.** Mach-Zehnder interferometric coupler according to claim 4, **characterised in that** the multicore fibre (FP) is a four-core fibre which is divided into sections slightly before the cell (CL), the back wall of which includes a collimation microlens opposite each core (24), and of which the front wall is adjacent to the large surface of a total-reflection prism (25), the optical signals coming from two of the four cores being respectively sent back towards the two other cores.

**Patentansprüche**

**1.** Mach-Zehnder-Interferometer-Koppler mit einem elektrooptischen Phasenmodulator, der auf der Verlaufsbahn von mindestens einer optischen Monomode-Faser angeordnet ist, **dadurch gekennzeichnet, daß** der Modulator aus einer ferroelektrischen chiralen smektischen Flüssigkristallzelle C* (CL) gebildet ist, durch die ein Lichtsignal verläuft, das von der Faser übertragen wird, wobei die Zelle (CL) mit transparenten Wänden und transparenten Steuerelektroden (5 bis 7) versehen ist, und wobei der als Lambda-Halbe-Streifen bzw. -Plättchen verwendete Flüssigkristall (CL) vom Typ SSFLC (surface stabilized ferroelectric liquid crystal = oberflächenstabilisierter ferroelektrischer Flüssigkristall) ist und einen großen Neigungswinkel $\theta$ aufweist, der möglichst nahe 45° ist, so daß der Modulator polarisationsunempfindlich ist.

**2.** Mach-Zehnder-Interferometer-Koppler nach Anspruch 1, **dadurch gekennzeichnet, daß** der Modulator auf der Verlaufsbahn von zwei parallelen optischen Fasern (A2, A3; B2, B3) angeordnet ist, wobei die beiden Fasern am Eingang und am Ausgang des Modulators durch zwei 3 dB-Koppler gekoppelt sind, wobei der Modulator derart ausgeführt ist, daß er das Lichtsignal moduliert, das von einer der beiden Fasern kommt.

**3.** Mach-Zehnder-Interferometer-Koppler nach Anspruch 2, **dadurch gekennzeichnet, daß** die beiden Fasern (A2, A3; B2, B3) geteilt sind, so daß jede zwei Enden beiderseits der Zelle aufweist, wobei die Wände (2, 3) der Zelle (CL) ein Grundloch (Ea, Eb, Sa, Sb) gegenüber jedem Ende umfassen, das in dem Grundloch vor einer Steuerelektrode (5 bis 7) montiert ist.

**4.** Mach-Zehnder-Interferometer-Koppler nach Anspruch 1, **dadurch gekennzeichnet, daß** die Faser eine mehradrige Faser (FM1, FM2) mit zwei oder vier Adern, die zwei individuelle Faserpaare bilden, ist.

**5.** Mach-Zehnder-Interferometer-Koppler nach Anspruch 4, **dadurch gekennzeichnet, daß** die mehradrige Faser derart geteilt ist, daß sie zwei mehradrige Fasern (FM1 und FM2) bildet, die beiderseits der Zelle (CL) angeordnet sind, so daß ihre Adern ausgerichtet sind, wobei die Wände (2, 3) der Zelle (CL) ein Grundloch gegenüber dem Ende jeder mehradrigen Faser umfassen, die in dem Grundloch vor einer Vielzahl von Steuerelektroden montiert sind.

6. Mach-Zehnder-Interferometer-Koppler nach Anspruch 4, **dadurch gekennzeichnet, daß** die mehradrige Faser (FN) eine Faser mit vier Adern ist, die vor der Zelle (CL) geteilt ist, deren Vorderseitenwand ein Grundloch gegenüber dem Ende der mehradrigen Faser umfaßt und an deren Rückseitenwand eine führende bzw. leitende Schicht (CG) angeordnet ist, die die jeweiligen optischen Signale überträgt, die von den vier Adern ausgegangen sind und beim Durchlaufen der Zelle moduliert wurden, um sie durch die Zelle (CL) unverändert wieder zu den anderen vier Adern der mehradrigen Faser (FN) zurückzusenden.

7. Mach-Zehnder-Interferometer-Koppler nach Anspruch 4, **dadurch gekennzeichnet, daß** die mehradrige Faser (FP) eine Faser mit vier Adern ist, die etwas vor der Zelle (CL) geteilt ist, deren Vorderseitenwand gegenüber jeder Ader eine Kollimationsmikrooptik (24) umfaßt, und deren Rückseitenwand an die große Fläche eines Prismas mit Totalreflexion (25) angrenzt, wobei die optischen Signale, die von zwei der vier Adern ausgegangen sind, jeweils zu den beiden anderen Adern zurückgesendet werden.

$\underline{FIG.1}$

$\underline{FIG.2}$

$\underline{FIG.3}$

FIG. 4

EP 0 783 127 B1

FIG. 5

FIG.6

FIG.7

FN

11    13

CG

CL

20
23
21

22

## FIG.8

FP

11    13

CL

24

24

25

## FIG.9